**Europäisches Patentamt**

**European Patent Office**

**Office européen des brevets**

(11) Publication number: **0 145 299**
**B1**

## (12) EUROPEAN PATENT SPECIFICATION

(45) Date of publication of patent specification: **16.09.87**

(51) Int. Cl.⁴: **C 03 C 25/02, C 03 C 25/04**

(21) Application number: **84307799.1**

(22) Date of filing: **12.11.84**

(54) Optical fibres.

(30) Priority: **06.12.83 GB 8332545**

(43) Date of publication of application:
**19.06.85 Bulletin 85/25**

(45) Publication of the grant of the patent:
**16.09.87 Bulletin 87/38**

(84) Designated Contracting States:
**AT BE CH DE FR IT LI LU NL SE**

(56) References cited:
**US-A-4 173 393**
**US-A-4 227 907**
**US-A-4 321 073**
**US-A-4 411 678**

**PATENT ABSTRACTS OF JAPAN, unexamined
applications, C field, vol. 7, no. 39, February 17,
1983, THE PATENT OFFICE JAPANESE
GOVERNMENT, page 87 C 151**

(73) Proprietor: **STC PLC
10, Maltravers Street
London, WC2R 3HA (GB)**

(72) Inventor: **Scott, Michael Grant
The Little House Littlebury
Saffron Walden Essex (GB)**

(74) Representative: **Dennis, Mark Charles
STC Patent Department Edinburgh Way
Harlow Essex CM20 2SH (GB)**

Courier Press, Leamington Spa, England.

## Description

This invention relates to optical fibres and, in particular, to methods of manufacturing optical fibres coated with a metallic glass.

It has previously been proposed to improve the fatigue performance of optical fibres by use of coatings which inhibit flaw growth by providing resistance to attack by moisture. Metallic glass coatings have been suggested for this hermeticity purpose (US—A—4173393). Optical fibres with metallic glass coatings are also useful for sensor applications. For that purpose short fibre lengths have been coated with metallic glass by sputtering. Fibre optic sensors are also known which are produced by glueing fibre to metallic glass strips.

The method of providing metallic glass coated optical fibres disclosed in US—A—4173393 involves coating a preform with a metallic glass forming material prior to fibre drawing. Reliance is placed on the high cooling rate pertaining during fibre drawing to produce metallic glass and thus an optical fibre coated with a metallic glass.

JP—A—57-191246 describes forming a uniform plastics coating layer on an optical fibre by attaching fine plastics powder to the fibre immediately after drawing from a preform. The powder is melted by the radiation of a laser beam and subsequently solidifies in a cooling tank to form a uniform plastics coating layer.

US—A—4321073 describes a method of providing an optical fibre with a metal coating and making use of a laser beam. In this case the laser beam is used to heat the fibre itself while the latter is passed through a chamber in order to cause dissociation of a metal containing compound, which is present in the chamber, at the fibre surface and deposit the metal on the fibre surface.

According to the present invention there is provided a method of manufacturing an optical fibre coated with a metallic glass characterised by the steps of applying a layer of a metallic glass forming alloy to an optical fibre and subsequently employing a laser beam to cause local heating of the metallic glass forming alloy, which local heating is carried out with the fibre moving rapidly through the laser beam so that the locally heated layer cools sufficiently rapidly to produce a metallic glass coating on the fibre.

Embodiments of the invention will now be described with reference to the accompanying drawings, in which:

Fig. 1 shows the layout of an on-line coating system for the performance of a manufacturing method according to the present invention, and

Fig. 2 illustrates in more detail and on a larger scale the laser fusion region of Fig. 1.

The methods proposed by the present invention may be carried out on-line with the fibre drawing process and thus permit on-line coating of multi-kilometre lengths to be achieved.

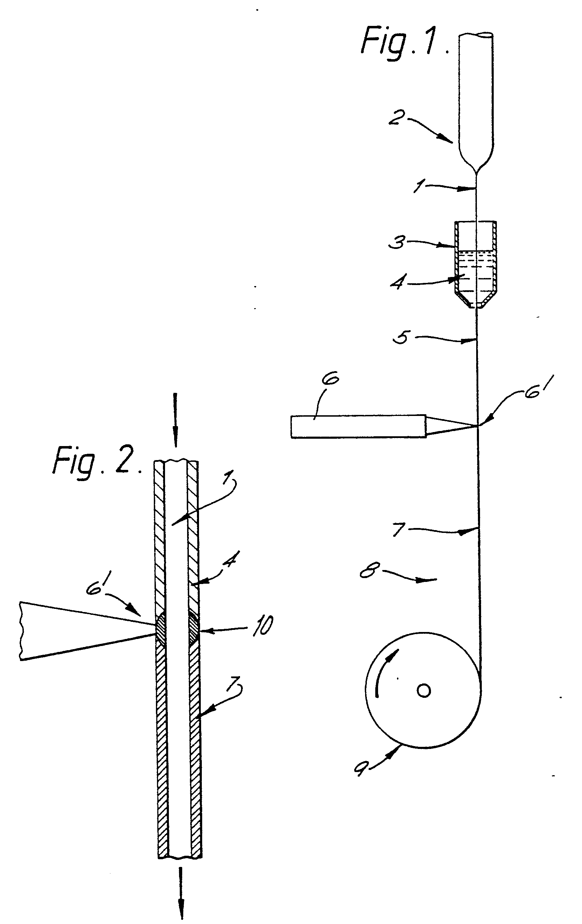

Referring firstly to Fig. 1, a newly drawn fibre 1, which may be drawn from a conventional preform or crucible indicated generally at 2, is passed through a crucible 3 containing a suitable molten metallic-glass forming alloy 4, for example Fe—Ni—B or Ni-Zr, and exits through an orifice at the bottom of the crucible 3 as a metal coated fibre 5. The coated fibre 4 is passed through the focus $6^1$ of a laser beam output from a laser 6 which serves to melt the metal layer locally. The molten metal cools rapidly and therefore produces a metallic-glass coated fibre at 7, the coating being fused to the fibre. A polymer coating may be applied in a conventional manner at 8 if desired. The coated fibre is taken up on a spool 9.

The laser fusion region is indicated more clearly in Fig. 2. The fibre 1 coated with metal 4, which is expected to be crystalline, is passed in the direction of the arrows through the laser focus $6^1$ resulting in a molten zone 10 which subsequently cools to produce the metallic glass coated fibre 7.

As an alternative to providing the metal to the fibre by dip coating, that is where the fibre is passed through a crucible of the molten metal, the coating may be applied to the fibre by other means, for example a vapour phase technique may be employed.

Whereas in the above described example the laser serves to fuse the coating to the fibre, the effect of the laser is basically to cause local heating which induces a physical change in the coating, such as glassifying the metal coating.

## Claims

1. A method of manufacturing an optical fibre coated with a metallic glass characterised by the steps of applying a layer of a metallic glass forming alloy (4) to an optical fibre (1) and subsequently employing a laser beam (6, 6') to cause local heating of the metallic glass forming alloy (4), which local heating is carried out with the fibre moving rapidly through the laser beam so that the locally heated layer cools sufficiently rapidly to produce a metallic glass coating on the fibre.

2. A method as claimed in claim 1, characterised in that the metallic glass forming alloy (4) is applied to the optical fibre (1) by passing the optical fibre through a bath (3) of molten metallic glass forming alloy.

3. A method as claimed in claim 1, characterised in that the metallic glass forming alloy (4) is applied to the optical fibre (1) by a vapour phase technique.

4. A method as claimed in any one of the preceding claims, characterised in that the application of the layer (4) of the metallic glass forming alloy and the local heating of the layer are carried out on-line with drawing of the optical fibre (1).

5. A method as claimed in any one of the preceding claims characterised by the step of coating the coated and laser heat treated fibre with a polymeric coating.

## Patentansprüche

1. Verfahren zur Herstellung einer mit metallischem Glas überzogenen optischen Faser, dadurch gekennzeichnet, daß eine Schicht aus einer metallisches Glas bildenden Legierung (4) auf die optische Faser (1) aufgebracht und anschließend mit Hilfe eines Laserstrahles (6, 6') die metallisches Glas bildende Legierung (4) örtlich erhitzt wird, wobei die örtliche Erhitzung bei rasch durch den Laserstrahl bewegter Faser durchgeführt wird, sodaß die örtlich erhitzte Schicht ausreichend rasch zur Erzeugung eines metallischen Glasüberzuges auf der Faser abgekühlt wird.

2. Verfahren nach Anspruch 1, dadurch gekennzeichnet, daß de metallisches Glas bildende Legierung (4) auf die optische Faser (1) aufgebracht wird, indem die optische Faser durch ein Bad (3) geschmolzener metallisches Glas bildender Legierung geführt wird.

3. Verfahren nach Anspruch 1, dadurch gekennzeichnet, daß die metallisches Glas bildende Legierung (4) mit einem Dampfphasenverfahren auf die optische Faser (1) aufgebracht wird.

4. Verfahren nach einem der Ansprüche 1 bis 3, dadurch gekennzeichnet, daß das Aufbringen der Schicht (4) aus der metallisches Glas bildenden Legierung und die örtliche Erhitzung der Schicht in einer Linie mit dem Abziehen der optischen Faser (1) durchgeführt wird.

5. Verfahren nach einem der Ansprüche 1 bis 4, dadurch gekennzeichnet, daß die überzogene und durch Laserwärme behandelte Faser mit einem Polymerüberzug überzogen wird.

## Revendications

1. Procédé de fabrication d'une fibre optique revêtue d'un verre métallique, caractérise par les étapes d'application d'une couche d'un alliage (4) destiné à former un verre métallique sur une fibre optique (1), et d'utilisation ultérieure d'un faisceau laser (6, 6') afin qu'il provoque un chauffage local de l'alliage (4) destiné à former un verre métallique, le chauffage local étant réalisé alors que la fibre se déplace rapidement dans le faisceau laser de manière que la couche chauffée localement se refroidisse suffisamment vite pour qu'elle forme un revêtement de verre métallique sur la fibre.

2. Procédé selon la revendication 1, caractérisé en ce que l'alliage (4) destiné à former un verre métallique est appliqué sur la fibre optique (1) par passage de la fibre optique dans un bain (3) d'un alliage fondu destiné à former un verre métallique.

3. Procédé selon la revendication 1, caractérisé en ce que l'alliage (4) destiné à former un verre métallique est appliqué sur la fibre optique (1) par une technique en phase vapeur.

4. Procédé selon l'une quelconque des revendications précédentes, caractérise en ce que l'application de la couche (4) de l'alliage destiné à former un verre métallique et le chauffage local de la couche sont réalisés en continu avec l'étirage de la fibre optique (1).

5. Procédé selon l'une quelconque des revendications précédentes, caractérisé par l'étape de revêtement de la fibre revêtue et traitée thermiquement par un laser, à l'aide d'un revêtement polymère.

Fig.1.

Fig.2.